# EUROPEAN PATENT SPECIFICATION

(11) **EP 2 592 456 B1**
(45) Date of publication and mention of the grant of the patent: **16.05.2018**
(21) Application number: 11777265.7
(22) Date of filing: 30.05.2011
(51) Int. Cl.: G02B 6/44, B29C 39/10, B29C 45/14

(54) **INSULATING ANTI-PRESSURE TUBE BODY FOR SUBMARINE OPTICAL FIBER CABLE DEVICE, SUBMARINE OPTICAL FIBER CABLE DEVICE AND MANUFACTURING METHOD THEREOF**
ISOLIERENDER, VOR DRUCK SCHÜTZENDER ROHRKÖRPER FÜR UNTERWASSER-GLASFASERKABELVORRICHTUNG, UNTERWASSER-GLASFASERKABELVORRICHTUNG UND HERSTELLUNGSVERFAHREN DAFÜR
CORPS DE TUBE ANTI-PRESSION ISOLANT POUR DISPOSITIF CÂBLE À FIBRES OPTIQUE SOUS-MARIN, DISPOSITIF CÂBLE SOUS-MARIN ET PROCÉDÉ DE FABRICATION ASSOCIÉS

(30) Priority: 21.10.2010 CN 201010526883
(43) Date of publication of application: 15.05.2013
(73) Proprietor: Huawei Marine Networks Co., Ltd., Tianjin, 300457 (CN)
(72) Inventor: LI, Qizhong, Shenzhen Guangdong 518129 (CN); CHEN, Fenglong, Shenzhen Guangdong 518129 (CN); JIN, Ge, Shenzhen Guangdong 518129 (CN); YANG, Xuguang, Shenzhen Guangdong 518129 (CN)
(74) Representative: Pfenning, Meinig & Partner mbB
(86) International application number: PCT/CN2011/074908
(87) International publication number: WO 2011/137846

(56) References cited:
- WO-A2-02/33796
- CN-A- 1 142 434
- CN-A- 86 105 424
- CN-A- 101 241 213
- CN-A- 101 707 082
- CN-Y- 2 528 033
- FR-A1- 2 691 519
- GB-A- 2 101 257
- GB-A- 2 238 884
- JP-A- 11 066 978
- JP-A- 2008 191 374
- US-A- 5 666 457
- US-A- 6 052 504

## Description

### FIELD OF THE INVENTION

The present invention relates to the field of submarine cable equipment protection technologies, and in particular, to an insulation pressure-resistance cylinder body of submarine cable equipment, submarine cable equipment, and a manufacturing method.

### BACKGROUND OF THE INVENTION

The entire submarine line system mainly includes Submarine Line Terminal Equipment (submarine line terminal equipment, SLTE for short), Network Protection Equipment (network protection equipment, NPE for short), Power Feeding Equipment (power feeding equipment, PFE for short), a submarine repeater (submarine repeater, RPT for short), a submarine cable (Submarine cable), a submarine line Branching Unit (Branching Unit, BU for short), a submarine line Optical Equalizer (Optical Equalizer, OEQ for short), and a Submarine Line Monitor (Submarine Line Monitor, SLM for short).

The SLTE is transmission equipment of Dense Wavelength Division Multiplexing (DWDM). The NPE is also referred to as Synchronous Digital Hierarchy (SDH interconnect equipment, SDH for short) interconnect equipment (SIE), and is interlaced connection equipment of the SDH. The PFE is installed on a land login station for powering submarine equipment. The submarine lines include optical cables and electric cables. The SLM is used for monitoring the submarine line and positioning fault points of the submarine line. The RPT is underwater optical amplifier equipment, and is used for amplifying a transmission signal of the SLTE, and meanwhile for providing a loop of an optical signal for the monitoring equipment SLM, that is, for amplifying and relaying the optical signal. In a long-distance submarine line system, since the optical signal is weakened, it is required to add a repeater in the system for amplifying the optical signal.

Since the RPT, the BU, and the OEQ are all underwater equipment, the equipment needs to resist a high submarine pressure. In addition, since the RPT internally has a high voltage about 20 and the external portion of the RPT is in communication with the seawater, the RPT further needs to have desirable insulation performance.

In order to solve the foregoing problems, a middle part of the RPT is disposed with a cylinder body having an insulation capability, that is, an insulation pressure-resistance cylinder body of submarine cable equipment, for insulating the internal portion from the seawater, resisting the high submarine pressure, and providing installation space for the devices. Likewise, the BU and the OEQ are both disposed with the insulation pressure-resistance cylinder body, so as to insulating the internal portion from the seawater, resist the high submarine pressure, and provide installation space for the devices.

In the prior art, the insulation pressure-resistance cylinder body of the submarine cable equipment has a three-layer structure. An outer layer is a pressure-resistance cylinder for resisting the high submarine pressure, a middle layer is an insulation layer for insulating the internal portion from the seawater, and an inner layer is an installation cylinder for installing the inner optical and electric devices.

The insulation material between the pressure-resistance cylinder and the installation cylinder is an epoxy resin with fiber glass. When the insulation pressure-resistance cylinder body of the submarine cable equipment is processed, the epoxy resin with fiber glass is first cast on the aluminum installation cylinder, the pressure-resistance cylinder is then heated to expand a radius of the pressure-resistance cylinder, the cast installation cylinder is pressed into the heated pressure-resistance cylinder, and after a cooling process, the insulation cylinder is fixed in the pressure-resistance cylinder.

The prior art has the following deficiency: the insulation layer has low installation compactness and easily sways.

GB 2101257 A discloses a joint between two tubular members 1 and 2. The member 1 may for example be the end of a damaged underwater tie of an oil rig, the damaged part of which has been cut away, and the member 2 may be a replacement section. The members 1 and 2 are positioned in telescoped relation with an annular space 3 there between. The outer surface of the existing member 1 is formed adjacent its end with an annular groove 4 which forms a radial enlargement of the annular space 3. The replacement member 2 is provided with an annular projection 5 forming a restriction of the annular space. The annular space 3 is filled with a cured epoxide which is placed under triaxial compression when the members 1 and 2 are placed in tension and thus resists separation of the joint. Other joints are described which are adapted to resist both tension and compression forces, and which join members which are not coaxial.

FR 2691519 A1 discloses a joint which consists of spiral or annular grooves (9, 10) in the pipe ends (4, 5), covered by a sleeve (3) with internal grooves (15), leaving a clearance between the pipe and sleeve surfaces. The clearance is injected with a self-setting material which, once hardened, allows for the transmission of efforts through the joint which are at least equal to those which can be borne by the pipe sections. The pipes can be, for example, of metal, and the grooves can be made in facing cylindrical or conical surfaces, while the sleeve can be made in two or more sections which are fitted together over the pipe ends and held in place by a smooth-surfaced outer bush. The self-setting material can be an epoxy resin, a polyester resin or polyurethane, a polymerising elastomer, a plastic concrete or a molten pitch, injected when hot. The clearances between the components can be maintained prior to injecting the self-setting substance by wedges or spacers.

US 5666457 A discloses a pressure resistant housing for protecting the interior of a repeater from the seawater. The pressure-resistant housing comprises a substantially cylindrical housing body formed of metal, and the repeater is accommodated in the pressure-resistant housing. The repeater comprises a substantially cylindrical metal case and a substantially cylindrical PE cylinder, wherein the substantially cylindrical metal case is for holding amplifying circuit unit, and the substantially cylindrical PE cylinder is formed of an insulating material such as polyethylene.

WO 02/33796 A2 has just discloses a cable closure system which comprises closure shells. A rib structure is included on the exterior and interior of the shells to provide the strength and stiffness required for the closures to maintain an internal air pressure of 10 psi, and the ribs are provided for structure and some form a support for permitting the closure to rest stably on a flat work surface.

GB 2238884 A discloses a tension-resistant connection for an optical fibre cable. The tension-resistant connection comprises a shrink tube and a metal pipe designed as a corrugated metal pipe, and the transverse rigidity of the metal pipe is increased by the corrugation. The shrink tube is pushed over the metal pipe.

US 6052504 A discloses a hood body which is provided with longitudinally extending and circumferential ribs.

### SUMMARY OF THE INVENTION

Embodiments of the present invention provide an insulation pressure-resistance cylinder body of submarine cable equipment, submarine cable equipment, and a manufacturing method, so as to solve the problem that an insulation layer of the cylinder body has low installation compactness and easily sways in the prior art.

An embodiment of the present invention provides an insulation pressure-resistance cylinder body of submarine cable equipment, which includes an installation cylinder, an insulation layer, and a pressure-resistance cylinder that are sequentially disposed from inside to outside.

A first groove is on an outer surface of the installation cylinder, and a second groove interlaced with the first groove is on an inner surface of the pressure-resistance cylinder.

The insulation layer is closely adhered to the outer surface of the installation cylinder and the inner surface of the pressure-resistance cylinder. The insulation layer is a resin potting compound layer, which is formed by pouring a resin potting compound into a cavity between the pressure-resistance cylinder and the installation cylinder.

An embodiment of the present invention further provides an RPT, which includes the insulation pressure-resistance cylinder body of the submarine cable equipment.

An embodiment of the present invention further provides a submarine line BU, which includes the insulation pressure-resistance cylinder body of the submarine cable equipment.

An embodiment of the present invention further provides a submarine line OEQ, which includes the insulation pressure-resistance cylinder body of the submarine cable equipment.

An embodiment of the present invention further provides a method for manufacturing the insulation pressure-resistance cylinder body of the submarine cable equipment, which includes:
forming a pressure-resistance cylinder and an installation cylinder through processing, where a first groove is on an outer surface of the installation cylinder, and a second groove interlaced with the first groove is on an inner surface of the pressure-resistance cylinder;
using a mould to directly pour a resin potting compound into a cavity between the pressure-resistance cylinder and the installation cylinder to form an insulation layer; and
forming an insulation pressure-resistance cylinder body through solidification among the resin potting compound of the insulation layer, the pressure-resistance cylinder, and the installation cylinder.

According to the technical solutions of the embodiments, through the interlaced grooves on the outer surface of the installation cylinder and on the inner surface of the pressure-resistance cylinder, the insulation layer, the installation cylinder, and the pressure-resistance cylinder are closely and integrally combined, thereby improving stability of the cylinder body.

### BRIEF DESCRIPTION OF THE DRAWINGS

FIG. 1 is a schematic structure view of an insulation pressure-resistance cylinder body of submarine cable equipment according to an embodiment of the present invention;
FIG. 2A and FIG. 2B are schematic structure views of a pressure-resistance cylinder in an insulation pressure-resistance cylinder body of submarine cable equipment according to an embodiment of the present invention;
FIG. 3A and FIG. 3B are schematic structure views of an installation cylinder in an insulation pressure-resistance cylinder body of submarine cable equipment according to an embodiment of the present invention;
FIG. 4A and FIG. 4B are another schematic structure views of a pressure-resistance cylinder in an insulation pressure-resistance cylinder body of submarine cable equipment according to an embodiment of the present invention;
FIG. 5A and FIG. 5B are another schematic structure views of an installation cylinder in an insulation pressure-resistance cylinder body of submarine cable equipment according to an embodiment of the present invention;
FIG. 6 is a flow chart of a method for manufacturing an insulation pressure-resistance cylinder body of submarine cable equipment according to an embodiment of the present invention; and
FIG. 7 is a schematic structural view of an RPT according to an embodiment of the present invention.

### DETAILED DESCRIPTION OF THE EMBODIMENTS

To make the objectives, technical solutions, and advantages of the present invention clearer, the technical solutions of the embodiments of the present invention will be described clearly and comprehensively below with reference to the accompanying drawings of the embodiments of the present invention. It is obvious that the embodiments to be described are only a part rather than all of the embodiments of the present invention. All other embodiments obtained by persons skilled in the art based on the embodiments of the present invention without creative effects shall fall within the protection scope of the present invention.

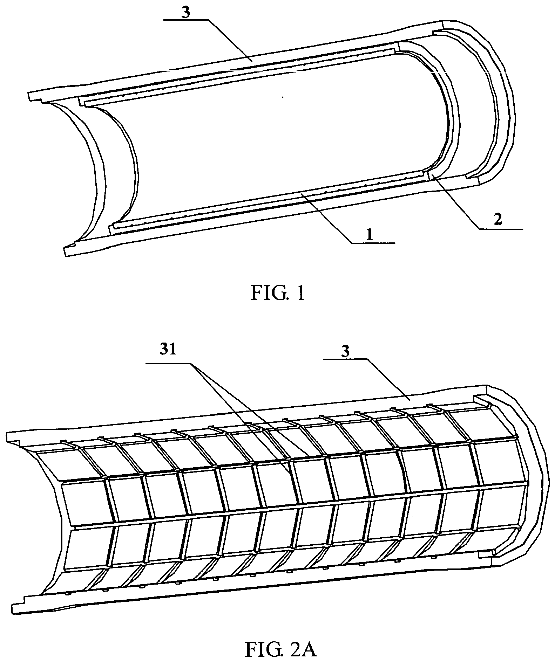

As shown in FIG. 1, an insulation pressure-resistance cylinder body of submarine cable equipment includes an installation cylinder 1, an insulation layer 2, and a pressure-resistance cylinder 3 that are sequentially disposed from inside to outside. It should be noted that, in order to clearly illustrate an inner structure of the insulation pressure-resistance cylinder body in this embodiment, FIG. 1 merely illustrates a half of the insulation pressure-resistance cylinder body.

The pressure-resistance cylinder 3 is on an outer layer, and may be made of a high-strength corrosion-resistant metal. The insulation layer 2 is in a middle layer, and may be made of a resin potting compound. The installation cylinder 1 is in an innermost layer, may be made of metals such as aluminum and copper, and is for installing inner devices.

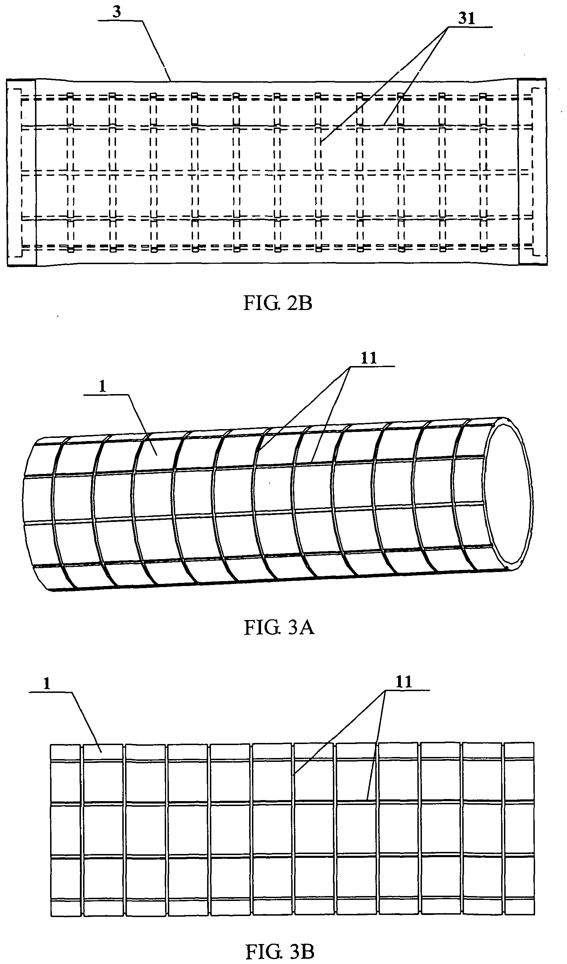

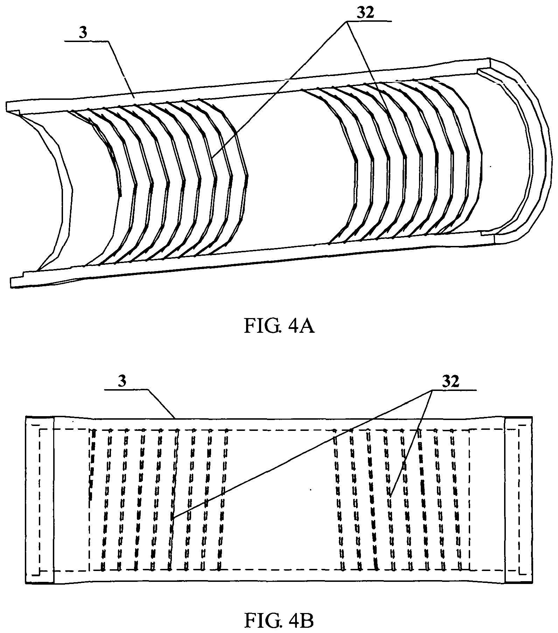

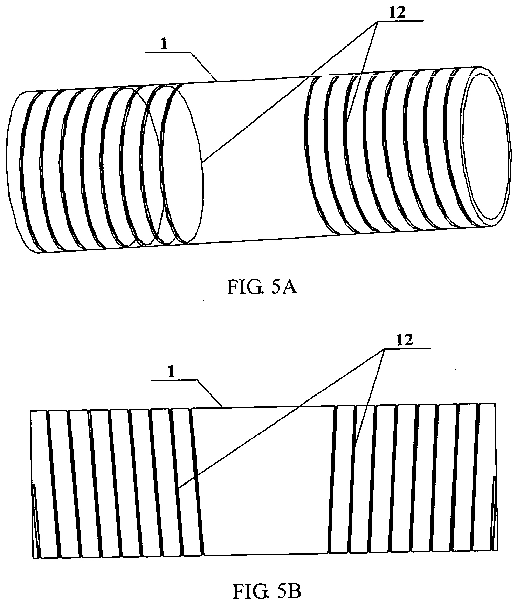

A first groove is opened on an outer surface of the installation cylinder 1 (referring to FIG. 3A, FIG. 3B, FIG. 5A, and FIG. 5B), and a second groove interlaced with the first groove is opened on an inner surface of the pressure-resistance cylinder 3 (referring to FIG. 2A, FIG. 2B, FIG. 4A, and FIG. 4B).

After the pressure-resistance cylinder 3 and the installation cylinder 1 are processed, a simple mould is used to directly pour the resin potting compound into a cavity between the pressure-resistance cylinder and the installation cylinder to form the insulation layer 2. After a period of time, the resin potting compound of the insulation layer 2 fixes the pressure-resistance cylinder and the installation cylinder, and the resin potting compound of the insulation layer 2, the pressure-resistance cylinder and the installation cylinder are integrally solidified. The insulation layer 2 is closely adhered to the outer surface of the installation cylinder 1 and the inner surface of the pressure-resistance cylinder 3.

A main material of the resin potting compound is silica gel, and the resin potting compound is formed through the mixing of the silica gel and other resins, and has desirable insulation performance.

In the foregoing embodiment, in the insulation pressure-resistance cylinder body of submarine cable equipment, through the interlaced grooves on the outer surface of the installation cylinder and on the inner surface of the pressure-resistance cylinder, the insulation layer, the installation cylinder, and the pressure-resistance cylinder are closely and integrally combined, thereby improving stability of the cylinder body. Further, the insulation layer uses the resin potting compound, so that the insulation layer is directly cast between the installation cylinder and the pressure-resistance cylinder, and then the assembly of the cylinder is completed, thereby solving the problems, such as a large mould required, a complex process, a high cost, and high requirements on the casting processing precision, the heating temperature of the pressure-resistance cylinder and an assembly process, that are brought by the using of the cast epoxy resin in the prior art, simplifying the assembly technology of the cylinder body and reducing the cost of the cylinder body.

As shown in FIG. 2A and FIG. 2B, a longitude and latitude-shaped groove 31 is opened on the inner surface of the pressure-resistance cylinder 3. It should be noted that, in order to clearly illustrate an inner structure of the pressure-resistance cylinder 3 in the insulation pressure-resistance cylinder body in this embodiment, FIG. 2A merely illustrates a half of the pressure-resistance cylinder 3.

As shown in FIG. 3A and FIG. 3B, a longitude and latitude-shaped groove 11 is opened on the outer surface of the installation cylinder 1.

The longitude and latitude-shaped groove 11 and the longitude and latitude -shaped groove 31 are interlaced with each other, so that after the insulation layer 2 is cast and solidified between the installation cylinder 1 and the pressure-resistance cylinder 3, the resin potting compound cast in the groove is capable of bearing axial and radial forces and impacts, and the installation cylinder 1, the insulation layer 2, and the pressure-resistance cylinder 3 are closely and integrally combined, thereby ensuring that when the pressure-resistance cylinder 3 bears an impact of 100 G, the insulation layer 2 and the installation cylinder 1 do not shed and deviate.

As shown in FIG. 4A and FIG. 4B, a spiral line-shaped groove 32 is opened on the inner surface of the pressure-resistance cylinder 3. It should be noted that, in order to clearly illustrate an inner structure of the pressure-resistance cylinder 3 in the insulation pressure-resistance cylinder body in this embodiment, FIG. 4A merely illustrates a half of the pressure-resistance cylinder 3.

As shown in FIG. 5A and FIG. 5B, a spiral line-shaped groove 12 is also opened on the outer surface of the installation cylinder 1.

A spiral direction of the spiral line-shaped groove 32 is opposite to a spiral direction of the spiral line-shaped groove 12.

After the pressure-resistance cylinder 3 and the installation cylinder 1 are processed, a simple mould is used to directly pour the resin potting compound into a cavity between the pressure-resistance cylinder and the installation cylinder to form the insulation layer 2. After a period of time, the resin potting compound of the insulation layer 2 fixes the pressure-resistance cylinder and the installation cylinder, and the resin potting compound of the insulation layer 2, the pressure-resistance cylinder and the installation cylinder are integrally solidified.

The first groove opened on the outer surface of the installation cylinder 1 and the second groove opened on the inner surface of the pressure-resistance cylinder 3 are not limited to the longitude and latitude-shaped groove and the spiral line-shaped groove, as long as the first groove is interlaced with the second groove. For example, the first groove is closed line-shaped around an axis of the installation cylinder, the second groove is closed line-shaped around the axis of the pressure-resistance cylinder, and the plane where the first groove is located is interlaced with the plane where the second groove is located.

In this way, the cylinder body of the submarine repeater is easily assembled, no special device is needed, and mold opening are not required, thereby reducing the cost.

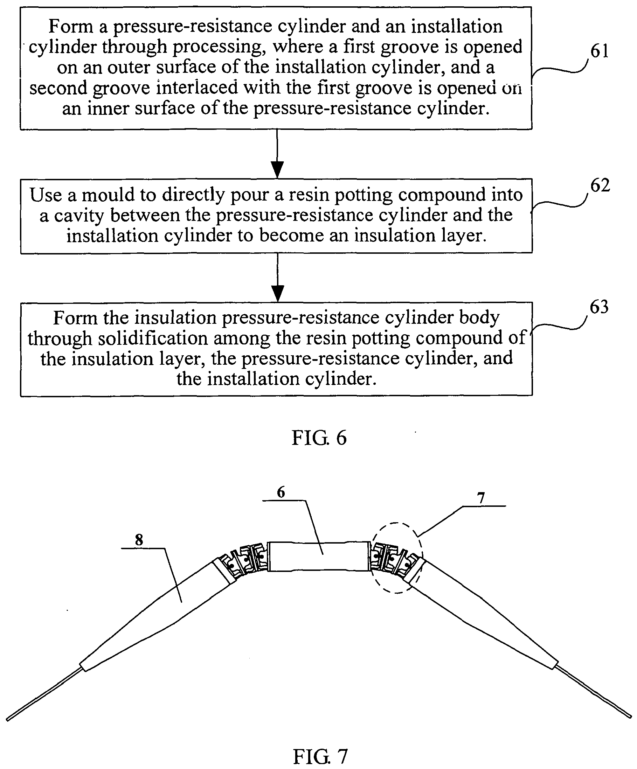

FIG. 6 is a flow chart of a method for manufacturing an insulation pressure-resistance cylinder body of submarine cable equipment according to an embodiment of the present invention. As shown in FIG. 6, the method for manufacturing the insulation pressure-resistance cylinder body of the submarine cable equipment may include the following steps.

Step 61: Form a pressure-resistance cylinder and an installation cylinder through processing, where a first groove is opened on an outer surface of the installation cylinder, and a second groove interlaced with the first groove is opened on an inner surface of the pressure-resistance cylinder.

Step 62: Use a mould to directly pour a resin potting compound into a cavity between the pressure-resistance cylinder and the installation cylinder to form an insulation layer.

Step 63: Form an insulation pressure-resistance cylinder body through solidification among the resin potting compound of the insulation layer, the pressure-resistance cylinder, and the installation cylinder.

Through step 61 to step 63, the insulation pressure-resistance cylinder body of the submarine cable equipment provided by the device embodiment may be obtained, and in the obtained insulation pressure-resistance cylinder body, the insulation layer, the installation cylinder, and the pressure-resistance cylinder are closely and integrally combined, thereby improving the stability of the cylinder body. In this embodiment, the resin potting compound is directly cast between the installation cylinder and the pressure-resistance cylinder to form the insulation layer, and then the assembly of the cylinder body is completed, thereby solving the problems, such as a large mould required, a complex process, a high cost, and high requirements on the casting processing precision, the heating temperature of the pressure-resistance cylinder and an assembly process, that are brought by the using of the cast epoxy resin in the prior art, simplifying the assembly technology of the cylinder body and reducing the cost of the cylinder body.

The submarine cable equipment such as the RPT, the BU, and the OEQ may include any one of cylinder bodies provided by the foregoing embodiment, resist the high submarine pressure and the seawater corrosion through the cylinder body, and achieve desirable insulation and sealing effects, thereby prolonging the service life of the submarine cable equipment and reducing the cost at the same time.

As shown in FIG. 7, the RPT includes a cylinder body 6, a universal joint 7, and a submarine line connector 8. The cylinder body 6 is in the middle, and two ends of the cylinder body 6 are respectively disposed with the sequentially connected universal joint 7 and the submarine line connector 8. The cylinder body 6 may be any one of the insulation pressure-resistance cylinder bodies of the submarine cable equipment with simple assembly, high installation precision and low cost, so that the entire cost of the RPT is reduced, and the service life is prolonged.

Finally, it should be noted that the above embodiments are merely provided for describing the technical solutions of the present invention, but not intended to limit the present invention. It should be understood by persons of ordinary skill in the art that although the present invention has been described in detail with reference to the embodiments, modifications can be made to the technical solutions described in the embodiments, or equivalent replacements can be made to some technical features in the technical solutions, as long as such modifications or replacements do not depart from the spirit and scope of the technical solutions of the embodiments of the present invention.

## Claims

1. An insulation pressure-resistance cylinder body of submarine cable equipment, comprising: an installation cylinder (1), an insulation layer (2), and a pressure-resistance cylinder (3) that are sequentially disposed from inside to outside; **characterized in that**:
a first groove (11, 12) is on an outer surface of the installation cylinder (1), and a second groove (31, 32) interlaced with the first groove (11, 12) is on an inner surface of the pressure-resistance cylinder (31, 32); and
the insulation layer (2) is closely adhered to the outer surface of the installation cylinder (1) and the inner surface of the pressure-resistance cylinder (3), wherein the insulation layer (1) is a resin potting compound layer, which is formed by pouring a resin potting compound into a cavity between the pressure-resistance cylinder (3) and the installation cylinder (1).

2. The insulation pressure-resistance cylinder body of submarine cable equipment according to claim 1, wherein the first groove (11) and the second groove (31) both are longitude and latitude-shaped grooves.

3. The insulation pressure-resistance cylinder body of submarine cable equipment according to claim 1, wherein the first groove (12) is a spiral-line shaped groove, and the second groove (32) is a spiral-line shaped groove with a spiral direction opposite to a spiral direction of the first groove (12).

4. The insulation pressure-resistance cylinder body of submarine cable equipment according to claim 1, wherein a material of the resin potting compound layer comprises silica gel.

5. The insulation pressure-resistance cylinder body of submarine cable equipment according to claim 1, wherein the installation cylinder (1) and the pressure-resistance cylinder (3) are made of metal.

6. A submarine repeater (RPT), comprising: the insulation pressure-resistance cylinder body of submarine cable equipment according to any one of claims 1 to 5.

7. A submarine line Branching Unit (BU), comprising: the insulation pressure-resistance cylinder body of submarine cable equipment according to any one of claims 1 to 5.

8. A submarine line Optical Equalizer (OEQ), comprising: the insulation pressure-resistance cylinder body of submarine cable equipment according to any one of claims 1 to 5.

9. A method for manufacturing the insulation pressure-resistance cylinder body of submarine cable equipment according to any one of claims 1 to 5, comprising:
forming a pressure-resistance cylinder and an installation cylinder through processing, wherein a first groove is on an outer surface of the installation cylinder, and a second groove interlaced with the first groove is on an inner surface of the pressure-resistance cylinder;
using a mould to directly pour a resin potting compound into a cavity between the pressure-resistance cylinder and the installation cylinder to form an insulation layer; and
forming an insulation pressure-resistance cylinder body through solidification among the resin potting compound of the insulation layer, the pressure-resistance cylinder, and the installation cylinder.

## Patentansprüche

1. Druckfester Isolationszylinderkörper einer Tiefseekabelausrüstung, der Folgendes umfasst:
einen Installationszylinder (1), eine Isolationsschicht (2) und einen druckfesten Zylinder (3), die sequentiell von innen nach außen angeordnet sind; **dadurch gekennzeichnet, dass**:
sich eine erste Nut (11, 12) auf einer Außenoberfläche des Installationszylinders (1) befindet und sich eine zweite mit der ersten Nut (11, 12) verschachtelte zweite Nut (31, 32) auf einer Innenoberfläche des druckfesten Zylinders (31, 32) befindet; und
die Isolationsschicht (2) eng an der Außenoberfläche des Installationszylinders (1) und der Innenoberfläche des druckfesten Zylinders (3) angehaftet ist, wobei die Isolationsschicht (1) eine Harzvergussmasseschicht ist, die gebildet wird, indem eine Harzvergussmasse in einen Hohlraum zwischen dem druckfesten Zylinder (3) und dem Installationszylinder (1) gegossen wird.

2. Druckfester Isolationszylinderkörper einer Tiefseekabelausrüstung nach Anspruch 1, wobei die erste Nut (11) und die zweite Nut (31) beide längs- und querförmige Nuten sind.

3. Druckfester Isolationszylinderkörper einer Tiefseekabelausrüstung nach Anspruch 1, wobei die erste Nut (12) eine spirallinienförmige Nut ist und die zweite Nut (32) eine spirallinienförmige Nut mit einer zu einer Spiralrichtung der ersten Nut (12) entgegengesetzten Spiralrichtung ist.

4. Druckfester Isolationszylinderkörper einer Tiefseekabelausrüstung nach Anspruch 1, wobei ein Material der Harzvergussmasseschicht Silicagel umfasst.

5. Druckfester Isolationszylinderkörper einer Tiefseekabelausrüstung nach Anspruch 1, wobei der Installationszylinder (1) und der druckfeste Zylinder (3) aus Metall gefertigt sind.

6. Tiefsee-"Repeater" (RPT), der Folgendes umfasst: den druckfesten Isolationszylinderkörper einer Tiefseekabelausrüstung nach einem der Ansprüche 1 bis 5.

7. Tiefseeleitungsverzweigungseinheit (BU: Branching Unit), die Folgendes umfasst:
den druckfesten Isolationszylinderkörper einer Tiefseekabelausrüstung nach einem der Ansprüche 1 bis 5.

8. Optischer Tiefseeleitung-"Equalizer" (OEQ: Optical Equalizer), der Folgendes umfasst: den druckfesten Isolationszylinderkörper einer Tiefseekabelausrüstung nach einem der Ansprüche 1 bis 5.

9. Verfahren zum Herstellen des druckfesten Isolationszylinderkörpers einer Tiefseekabelausrüstung nach einem der Ansprüche 1 bis 5, das Folgendes umfasst:
Bilden eines druckfesten Zylinders und eines Installationszylinders durch Verarbeitung, wobei sich eine erste Nut auf einer Außenoberfläche des Installationszylinders befindet und sich eine mit der ersten Nut verschachtelte zweite Nut auf einer Innenoberfläche des druckfesten Zylinders befindet;
Verwenden einer Gussform, um eine Harzvergussmasse direkt in einen Hohlraum zwischen dem druckfesten Zylinder und dem Installationszylinder zu gießen, um eine Isolationsschicht zu bilden; und
Bilden eines druckfesten Isolationszylinderkörpers durch eine Verfestigung zwischen der Harzvergussmasse der Isolationsschicht, dem druckfesten Zylinder und dem Installationszy linder.

## Revendications

1. Corps cylindrique d'isolation et de résistance à la pression d'un équipement pour câble sous-marin, comprenant : un cylindre d'installation (1), une couche d'isolation (2) et un cylindre de résistance à la pression (3) qui sont successivement disposés de l'intérieur vers l'extérieur ; **caractérisé en ce que** :
une première rainure (11, 12) se trouve sur une surface extérieure du cylindre d'installation (1), et une deuxième rainure (31, 32) entrelacée avec la première rainure (11, 12) se trouve sur une surface intérieure du cylindre de résistance à la pression (31, 32) ; et
la couche d'isolation (2) est parfaitement collée à la surface extérieure du cylindre d'installation (1) et la surface intérieure du cylindre de résistance à la pression (3), la couche d'isolation (1) étant une couche de composé d'enrobage à base de résine, qui est formée en versant un composé d'enrobage à base de résine dans une cavité entre le cylindre de résistance à la pression (3) et le cylindre d'installation (1).

2. Corps cylindrique d'isolation et de résistance à la pression d'un équipement pour câble sous-marin selon la revendication 1, dans lequel la première rainure (11) et la deuxième rainure (31) sont toutes deux des rainures de forme longitudinale et transversale.

3. Corps cylindrique d'isolation et de résistance à la pression d'un équipement pour câble sous-marin selon la revendication 1, dans lequel la première rainure (12) est une rainure en forme de spirale, et la deuxième rainure (32) est une rainure en forme de spirale avec une direction de spirale opposée à une direction de spirale de la première rainure (12).

4. Corps cylindrique d'isolation et de résistance à la pression d'un équipement pour câble sous-marin selon la revendication 1, dans lequel un matériau de la couche de composé d'enrobage à base de résine comprend du gel de silice.

5. Corps cylindrique d'isolation et de résistance à la pression d'un équipement pour câble sous-marin selon la revendication 1, dans lequel le cylindre d'installation (1) et le cylindre de résistance à la pression (3) sont constitués de métal.

6. Répéteur (RPT) sous-marin, comprenant : le corps cylindrique d'isolation et de résistance à la pression d'un équipement pour câble sous-marin selon l'une quelconque des revendications 1 à 5.

7. Unité de ramification (BU) de ligne sous-marine, comprenant : le corps cylindrique d'isolation et de résistance à la pression d'un équipement pour câble sous-marin selon l'une quelconque des revendications 1 à 5.

8. Égaliseur optique (OEQ) de ligne sous-marine, comprenant : le corps cylindrique d'isolation et de résistance à la pression d'un équipement pour câble sous-marin selon l'une quelconque des revendications 1 à 5.

9. Procédé de fabrication du corps cylindrique d'isolation et de résistance à la pression d'un équipement pour câble sous-marin selon l'une quelconque des revendications 1 à 5, comprenant les étapes suivantes :
former un cylindre de résistance à la pression et un cylindre d'installation par traitement, une première rainure se trouvant sur une surface extérieure du cylindre d'installation, et une deuxième rainure entrelacée avec la première rainure se trouvant sur une surface intérieure du cylindre de résistance à la pression ;
utiliser un moule pour verser directement un composé d'enrobage à base de résine dans une cavité entre le cylindre de résistance à la pression et le cylindre d'installation pour former une couche d'isolation ; et
former un corps cylindrique d'isolation et de résistance à la pression par solidification entre le composé d'enrobage à base de résine de la couche d'isolation, le cylindre de résistance à la pression, et le cylindre d'installation.
